# EUROPÄISCHE PATENTSCHRIFT

(11) **EP 2 035 253 B1**
(45) Veröffentlichungstag und Bekanntmachung des Hinweises auf die Patenterteilung: **09.04.2014**
(21) Anmeldenummer: 07764826.9
(22) Anmeldetag: 25.06.2007
(51) Int. Cl.: B60N 2/42, B60N 2/427

(54) **FAHRZEUGSITZ MIT EINEM SITZTEIL UND MIT EINER RÜCKHALTEVORRICHTUNG ZUR VERHINDERUNG DES DURCHRUTSCHENS EINES PASSAGIERS**
VEHICLE SEAT COMPRISING A SEAT PART AND AN ANTI-SUBMARINING RESTRAINT DEVICE
SIÈGE DE VÉHICULE PRÉSENTANT UNE PARTIE ASSISE ET UN DISPOSITIF DE RETENUE DESTINÉ À EMPÊCHER LE GLISSEMENT D'UN OCCUPANT

(30) Priorität: 23.06.2006 DE 102006029330
(43) Veröffentlichungstag der Anmeldung: 18.03.2009
(73) Patentinhaber: Johnson Controls GmbH, 51399 Burscheid (DE)
(72) Erfinder: GROSS, Bernd, 40764 Langenfeld (DE); MUND, Harald, 52441 Linnich (DE)
(74) Vertreter: Wolff, Felix
(86) Internationale Anmeldenummer: PCT/EP2007/005593
(87) Internationale Veröffentlichungsnummer: WO 2007/147636

(56) Entgegenhaltungen:
- EP-A2- 1 199 214
- WO-A-2004/030980
- DE-A1- 3 841 688
- DE-A1- 10 231 794
- DE-A1- 10 320 967
- DE-A1- 19 943 595
- DE-A1-102004 019 221
- US-A1- 2003 227 213

## Beschreibung

Die vorliegende Erfindung betrifft einen Fahrzeugsitz mit einem Sitzteil und mit einer Rückhaltevorrichtung zur Verhinderung des Durchrutschens eines Passagiers auf dem Fahrzeugsitz bei einer Unfallverzögerung, wobei die Rückhaltevorrichtung in eine eingefahrene inaktive Position einstellbar ist und wobei die Rückhaltevorrichtung in eine ausgefahrene aktive Position einstellbar ist, wobei das Sitzteil eine eine Sitzfläche definierende Polsterung und einen unterhalb der Polsterung vorgesehenen Polsterträger aufweist.

Solche Fahrzeugsitze sind allgemein bekannt, so zum Beispiel aus den Druckschriften DE 10 2004 019221 A, DE 38 41 688 A, WO 2004/030980 A, DE 103 20 967 A, EP 1 199 214 oder US 2003/227213 A. Beispielsweise ist aus der deutschen Offenlegungsschrift DE 102 31 794 A1 ein Kraftfahrzeugsitz mit einer Sitzfläche auf der Oberfläche einer Polsterung bekannt, wobei unterhalb der Sitzfläche eine Sitzschale vorgesehen ist und wobei zwischen der Sitzschale und der Sitzfläche des Sitzteiles ein bügelförmigen Verstellelement angeordnet ist, das in einem Crash-Fall aus einer Ausgangslage heraus derart bewegt werden kann, dass die Sitzfläche und das Verstellelement einer Vorverlagerung in Fahrzeuglängsrichtung des Beckens einer auf der Sitzfläche sitzenden Person entgegenwirkt. Bei diesem Fahrzeugsitz ist das Verstellelement durch eine von dem Benutzer (insbesondere dem Becken eines Benutzers) ausgeübten Kraft plastisch verformbar ausgestaltet. Dies hat den Nachteil, dass lediglich eine relativ kleine potentielle Kraftübertragungsfläche zur Abbremsung des Benutzers vorgesehen ist, was in einem Crashfall mit entsprechend hohen zu übertragenden Kräften pro Fläche verbunden ist. Weiterhin hat der bekannte Fahrzeugsitz den Nachteil, dass es zur Realisierung einer aktiven Rückhaltevorrichtung zur Verhinderung des Durchrutschens einer auf dem Fahrzeugsitz sitzenden Person (eine sogenannte Anti-Submarining-Rückhaltevorrichtung), d.h. einer Rückhaltvorrichtung, die von einer inaktiven in eine aktive, ausgefahrene Position überführt werden kann, in aller Regel vorgesehen ist, dass die Rückhaltevorrichtung beim Zusammenbau des Fahrzeugsitzes mit Strukturelementen des Fahrzeugsitzes, etwa Sitzseitenteilen oder eines Sitzteil-Rahmens oder dergleichen, verbunden werden muss, wodurch keine Modularität in dem Sinne vorhanden ist, dass erst zu einem späten Stadium der Sitzherstellung bzw. der Sitzfertigstellung entschieden werden kann, ob der Fahrzeugsitz mit einer Rückhaltevorrichtung ausgestattet werden soll oder nicht. Bei bekannten Fahrzeugsitzen müssen daher über einen größeren Teil der Herstellungskette des Fahrzeugsitzes eine größere Anzahl von Varianten des Fahrzeugsitzes berücksichtigt werden, was zu höherem Aufwand bei der Logistik und der Herstellung insgesamt führt. Aus der deutschen Offenlegungsschrift DE 199 43 595 A1 ist ein Fahrzeugsitz mit einem Sitzgestell, einem Sitzkissen und einem Sitzkissenträger bekannt, wobei in Längsrichtung etwa in der Mitte des Sitzkissenträgers eine Anti-Submarining-Rampe, angebracht ist, welche sich zum vorderen Rand des Sitzkissenträgers erstreckt und ungefähr die vordere Hälfte des Sitzkissenträgers bedeckt. Zwischen der Rampe und dem Sitzkissenträger oder in der Rampe eingebettet ist ein normalerweise zusammengefalteter Airbag vorgesehen, der im Crash-Fall aufgeblasen wird. Ein solcher Airbag ist jedoch vergleichsweise teuer, so dass insgesamt der bekannte Fahrzeugsitz vergleichsweise aufwändig ist.

Der vorliegenden Erfindung liegt daher die Aufgabe zugrunde, einen Fahrzeugsitz mit einer Rückhaltevorrichtung zur Verhinderung des Durchrutschens eines auf dem Fahrzeugsitz befindlichen Passagiers im Falle einer Unfallverzögerung bereitzustellen, wobei der Fahrzeugsitz zum einen leicht und einfach mit möglichst geringem Aufwand und möglichst spät in der Herstellungskette des Fahrzeugsitzes mit einer solchen Rückhaltevorrichtung ausgestattet werden kann und wobei zum anderen die Rückhaltevorrichtung derart ausgestattet vorgesehen ist, dass die Flächenpressung bei der Kraftübertragung (in einer Unfallsituation) zwischen einem Benutzer und der Rückhaltevorrichtung möglichst gering gehalten wird.

Die Aufgabe wird durch einen Fahrzeugsitz mit einem Sitzteil und mit einer Rückhaltevorrichtung zur Verhinderung des Durchrutschens eines Passagiers auf dem Fahrzeugsitz nach Anspruch 1 gelöst. Hierdurch ist es vorteilhaft möglich, dass zum einen die Modularität der Rückhaltevorrichtung gewährleistet ist, d.h. die Möglichkeit, erst zu einem späten Zeitpunkt in der Herstellungskette des Fahrzeugsitzes zu entscheiden, ob ein bestimmter Fahrzeugsitz mit einer erfindungsgemäßen Rückhaltevorrichtung ausgestattet sein soll oder nicht. Zum anderen ist das dadurch möglich, dass die ordnungsgemäße Funktionalität der Rückhaltevorrichtung besonders gut und sicher gewährleistet werden kann, wobei insbesondere die Flächenpressung (d.h. die Kraftwirkung pro Fläche) zwischen Körperteilen eines auf dem Fahrzeugsitz befindlichen Benutzers (insbesondere des Beckenbereichs) und der Rückhaltevorrichtung im Verlauf einer Unfallsituation im Sinne einer Verminderung des Maximalwertes verringert werden kann. Durch eine Variation der Energiedissipationseigenschaften des Aufstellelements und/oder des Oberteils ist es gemäß der vorliegenden Erfindung vorteilhaft möglich, besonders leicht und kostengünstig eine Anpassung (Applikation) an unterschiedliche Fahrzeugtypen zu ermöglichen. Erfindungsgemäß ist vorgesehen, dass die Rückhaltevorrichtung ein Aktuierungsmittel, insbesondere einen pyrotechnischen Linearaktuator und/oder einen reversibel arbeitenden Aktuator, aufweist, wobei das Aktuierungsmittel zwischen dem Polsterträger und der Polsterung angeordnet ist oder zwischen dem Polsterträger und der Polsterung abgestützt ist, wobei insbesondere eine Betätigung des Aktuierungsmittels bereits zeitlich vor dem Vorliegen einer Unfallverzögerung vorgesehen ist. Im Falle der Abstützung des Aktuierungsmittels zwischen dem Polsterträger und der Polsterung kann das Aktuierungsmittel teilweise auch unterhalb des Polsterträgers verlaufen bzw. angeordnet sein. Linearaktuatoren sind vergleichsweise klein und bauraumkompakt realisierbar, so dass hierdurch die Rückhaltevorrichtung besonders bauraumkompakt ausgestaltbar ist und die erfindungsgemäß modularisierte Einbauweise der Rückhaltevorrichtung in den Fahrzeugsitz besonders gut realisierbar ist. Im Sinne der vorliegenden Erfindung wird unter einem Polsterträger eine einzige Strukturkomponente oder eine Mehrzahl von Strukturkomponenten des Sitzteils verstanden, welche zumindest in der Nähe der gegebenenfalls später an dem Sitz zu befestigenden Polsterung vorgesehen sind und die Polsterung halten bzw. stützen. Als Polsterträger kommt hierbei beispielsweise ein im wesentlichen über die gesamte Sitzfläche durchgehender Polsterträger als im wesentlichen durchgängige Polsterwanne bzw. Sitzwanne in Frage. Ferner kommt erfindungsgemäß beispielsweise eine sogenannte geteilte Sitzwanne bzw. Teilsitzwanne in Frage, bei der eine solche Teilsitzwanne etwa die vordere Hälfte oder lediglich die vorderen oder hinteren ca. 20% bzw. lediglich 10% der Polsterung stützt. Weiterhin kommen auch Strukturelemente wie beispielsweise rohrartige oder offene Versteifungselemente als Teil des Polsterträgers in Frage. Bei einem Polsterträger im Sinne der vorliegenden Erfindung kann dieser auch teilweise eine Unterfederung aufweisen. Erfindungsgemäß kann alternativ oder kumulativ zu einem irreversibel arbeitenden Aktuierungsmittel, beispielsweise ein pyrotechnischer Linearaktuator, auch ein reversibel arbeitendes Aktuierungsmittel, beispielsweise ein elektromotorisch angetriebener Linearaktuator, vorgesehen sein, der zusammen mit einer entsprechenden, einen Unfall voraussehenden Sensorik (Pre Crash Sensorik) zu einer Einstellung der ausgefahrenen aktiven Position der Rückhaltevorrichtung oder zu einer Einstellung einer intermediären Position der Rückhaltevorrichtung (zwischen der inaktiven Position und der aktiven ausgefahrenen Position) bereits zeitlich vor einem Unfallgeschehen und damit zeitlich vor dem Vorliegen einer Unfallverzögerung (d.h. einer für ein Unfallgeschehen typischen Verzögerung) führt.

Ferner ist es vorgesehen, dass die Rückhaltevorrichtung ein von dem Aktuierungsmittel bewegbares Aufstellelement aufweist, wobei das Aufstellelement mittels des Aktuierungsmittels von einer der inaktiven Position der Rückhaltevorrichtung entsprechenden eingezogenen Position aus in eine der aktiven Position der Rückhaltevorrichtung entsprechenden ausgestellten Position einstellbar ist. Hierdurch ist es möglich, dass das Aufstellelement unabhängig von dem Aktuierungsmittel auf den jeweiligen Anwendungsfall hin optimierbar ist, beispielsweise hinsichtlich seiner Komprimierbarkeit (beispielsweise zur Energiedissipation während einer Unfallsituation) oder auch hinsichtlich seiner Abmessungen, die ihrerseits beispielsweise die Ausstellhöhe des Rückhaltemittels mitbestimmen.

Weiterhin ist nicht zur Erfindung gehörend öffenbart, dass zwischen der eingezogenen Position und der ausgestellten Position des Aufstellelements eine Drehung um eine im wesentlichen waagrecht und insbesondere quer zur Fahrzeugrichtung verlaufende Achse vorgesehen ist, wobei das Aufstellelement bevorzugt als plattenförmiges Aufstellelement vorgesehen ist, wobei die Drehung um die im wesentlichen waagrecht verlaufende Achse bevorzugt als eine Drehung in Fahrtrichtung vorgesehen ist. Hierdurch kann als Aufstellelement eine Platte Verwendung finden, die sich im wesentlichen über die gesamte Breite der bevorzugt modular einbaubaren Rückhaltevorrichtung erstreckt, wobei die Platte in der eingezogenen Position des Aufstellelementes im wesentlichen parallel zur Sitzfläche bzw. parallel zum Polsterträger angeordnet ist und in der ausgestellten Position des Aufstellelementes im wesentlichen senkrecht zur Sitzfläche bzw. senkrecht zum Polsterträger angeordnet ist. Zwischen dem Aufstellelement und der Polsterung des Sitzteils ist bevorzugt das Oberteil als eine Abdeckung der Rückhaltevorrichtung im Sinne einer Anti-Submariningrampe vorhanden. Hierdurch wird vorteilhafterweise gewährleistet, dass der Körper des Sitzinsassen im Falle einer Unfallsituation (d.h. einer negativen Beschleunigung bzw. einer Verzögerung, die einen vorbestimmten Grenzwert übersteigt) eine Kraftwirkung auf die Rückhaltevorrichtung möglichst großflächig ausübt, so dass das Verletzungsrisiko des Sitzinsassen vermindert wird. Ein besonderer Vorteil einer Bewegung des Aufstellelements in Fahrzeugrichtung besteht darin, dass die Kraftwirkung des Aktuierungsmittels, insbesondere ein pyrotechnischer Linearaktuator, derart gewählt werden kann, dass die Kraftrichtung des Aktuierungsmittels bzw. deren Verlängerung jedenfalls nicht in Richtung von Hauptkörperteilen (insbesondere in Richtung des Beckens bzw. in Richtung des Rumpfs) des Sitzinsassen gerichtet ist. Hierdurch wird ebenfalls das Verletzungsrisiko reduziert.

Erfindungsgemäß ist es ferner vorgesehen, dass zwischen der eingezogenen Position und der ausgestellten Position des Aufstellelements eine Drehung zumindest eines Teils des Aufstellelements um eine im wesentlichen senkrecht verlaufende Achse vorgesehen ist. Es ist ferner offenbart, dass das Aufstellelement insbesondere als teleskopartig ausfahrbares Aufstellelement mit einem oder mehreren Ausfahrelementen vorgesehen ist. Hierdurch ist es vorteilhaft möglich, dass das Aufstellelement in kompakter Bauweise, beispielsweise durch teleskopartig ineinandergreifende becherartige Bauteile, realisierbar ist und zur Realisierung der ausgestellten Position ausgehend von der eingezogenen Position eine Drehbewegung wenigstens eines der becherartigen Bauteile um deren Zentrum erfolgt. Hierbei ist erfindungsgemäß bevorzugt eine spiralförmig vorgesehene Stift-Kulissen-Führung der wenigstens zwei becherartigen Bauteile zur Umsetzung der Drehbewegung in eine Ausstellbewegung vorgesehen. Zur Realisierung einer Verriegelung eines solchen Ausstellmittels kann die Stift-Kulissen-Führung mittels zum Beispiel einer asymmetrischen Verzahnung derart ausgestaltet sein, dass lediglich eine Bewegung in Richtung der Ausstellbewegung möglich ist. Alternativ zu einer beispielhaften Stift-Kulissen-Führung kann es erfindungsgemäß bei der teleskopartig ausfahrbaren Variante des Aufstellelementes auch vorgesehen sein, dass beispielsweise zwei becherartige Bauteile gewindeartig ineinander greifen und durch eine Drehung des einen dieser Bauteile relativ zum anderen eine Aufstellung bewirkt wird.

Ferner ist es bevorzugt, wenn das Aufstellelement und/oder das Oberteil eine Mehrzahl von Materialzonen unterschiedlichen Materials aufweist, wobei unterschiedliche Materialzonen ein unterschiedliches Deformationsverhalten aufweisen bzw. wenn das Aufstellelement und/oder das Oberteil zumindest teilweise reversibel deformierbar vorgesehen sind, wobei das Aufstellelement vorzugsweise einen Stoßdämpfer oder einen Gasdruckdämpfer bzw. eine Mehrzahl solcher Elemente aufweist. Hierdurch ist es erfindungsgemäß vorteilhaft möglich, dass für unterschiedlich starke Unfallsituationen bzw. unterschiedlich starke zu übertragende Kräfte zwischen dem Benutzer des Fahrzeugsitzes und dem Fahrzeugsitz ein unterschiedliches Deformationsverhalten realisiert wird. Weiterhin ist es erfindungsgemäß besonders vorteilhaft möglich, dass aufgrund einer unterschiedlichen unfallbedingte Belastungssituation des Aufstellelements bzw. des Oberteils bedingt durch eine bestimmte Sitzposition bzw. bedingt durch bestimmte Kraftübertragungsverhältnisse aufgrund der Größe des Benutzers ein an die jeweilige Situation angepasstes Deformationsverhalten der Rückhaltevorrichtung erfolgt.

Besonders bevorzugt ist es, wenn die Rückhaltevorrichtung ein weiteres Deformationselement aufweist. Hierdurch ist es möglich, die Deformationsantwort der Rückhaltevorrichtung noch besser auf eine gegebene Unfallsituation abzustimmen.

Ferner ist es bevorzugt, wenn die Rückhaltevorrichtung ein Unterteil und ein Oberteil aufweist, wobei das Unterteil Befestigungselemente zur Verbindung der Rückhaltevorrichtung mit dem Polsterträger aufweist bzw. wenn der Polsterträger Befestigungselemente zur Verbindung der Rückhaltevorrichtung mit dem Polsterträger aufweist. Hierdurch ist es in einfacher Weise möglich, die Verbindung zwischen der Rückhaltevorrichtung und dem Polsterträger herzustellen, ohne dass aufwändige Werkzeuge hierfür erforderlich sind bzw. die Tätigkeit hohe Qualifikationsanforderungen stellt. Als besonders bevorzugt hat sich hierbei erfindungsgemäß eine Befestigung durch Aufstecken bzw. Aufschieben bzw. Verclipsen bzw. Verkleben erwiesen. Es können auch Kombinationen von zwei oder mehrerer solcher Befestigungsmöglichkeiten eingesetzt werden, etwa zur Sicherung einer Aufsteckverbindung oder eine Aufschiebverbindung. Alternativ zu der Ausführungsvariante der Rückhaltevorrichtung mit einem Unterteil und einem Oberteil kann es auch vorgesehen sein, dass die Funktionalität des Unterteils (etwa die Bereitstellung von Anbindungsstellen von Hebeln oder dergleichen) durch den Polsterträger übernommen wird (Vollintegration des Unterteils in den Polsterträger) und somit das Unterteil eingespart werden kann, so dass das Gewicht reduziert werden kann und Kosten eingespart werden können. Beispielsweise ist es in diesem Fall vorgesehen, dass die Rückhaltevorrichtung, also beispielsweise Hebelanlenkungen oder dergleichen der Rückhaltevorrichtung, mit dem Unterteil verschraubt und/oder vernietet und/oder verstiftet werden.

Ferner ist erfindungsgemäß bevorzugt, dass die Rückhaltevorrichtung ein Verriegelungsmittel aufweist, wobei das Verriegelungsmittel bevorzugt durch die Bewegung des Aufstellelements bewegbar vorgesehen ist. Es ist ferner nicht zur Erfindung gehörend offenbart, dass insbesondere das Verriegelungsmittel eine Kulisse und einen Bolzen aufweist, wobei der Bolzen einen durchmesserverkleinerten axialen ersten Bereich und einen durchmesservergrößerten axialen zweiten Bereich aufweist und wobei eine axiale Bewegung des Bolzens zur Herbeiführung der Verriegelung vorgesehen ist. Beispielsweise ist es möglich, dass ein Schlepphebel an seinem dem Aufstellelement gegenüberliegenden Ende in einem Gehäuse geführt ist, welches eine Mehrzahl von federbelasteten und in der eingezogenen Position des Aufstellelements an den Schlepphebel andrückenden Rastbolzen aufnimmt. Sobald der Schlepphebel ausreichend weit in Richtung auf die ausgestellte Position des Aufstellelements ausgefahren ist, verriegelt einer der Rastbolzen die Rückbewegung des Schlepphebels. Durch eine Mehrzahl solcher Rastbolzen können eine Mehrzahl von Einrastpositionen definiert werden. Dies ist insbesondere für den Fall vorteilhaft, dass (wegen Fehlfunktion des Aktuierungsmittels oder wegen der besonderen Situation einer Sitzbelegung etwa durch eine abnorm große oder eine abnorm kleine Person als Sitzinsassen) keine Bewegung des Ausstellelements in seine am weitesten ausgestellte Position erfolgt. Eine weitere Ausführungsvariante der Rückhaltevorrichtung zur alternativen Realisierung eines Verriegelungsmittels kann eine Kulisse mit einem Anfangsbereich und mit einem Endbereich vorsehen, wobei in die Kulisse ein Bolzen eingreift, der zusammen mit dem Aufstellelement bewegt wird, wobei sich der Bolzen in der inaktiven Position der Rückhaltevorrichtung im Anfangsbereich der Kulisse befindet und in der aktiven Position der Rückhaltevorrichtung im Endbereich der Kulisse befindet und wobei die Form der Kulisse derart gestaltet ist, dass zumindest in der (vollständig) aktivierten Position bzw. aktiven Position der Rückhaltevorrichtung eine Bewegung des Aufstellelementes bzw. des Bolzens zurück verhindert. Hierbei kann die Kulisse gemäß einer weiteren Variante des Verriegelungsmittels beispielsweise eine Krümmung bzw. eine Knickstelle derart aufweisen, dass der mit dem Aufstellelement bewegte Bolzen aufgrund der in einer Unfallsituation vorliegenden Kraftverhältnisse sich nicht mehr zurück in den Anfangsbereich bewegen kann bzw. eine solche Zurückbewegung sehr unwahrscheinlich ist. Ferner kann in einer weiteren Variante anstelle der Kulisse eine Steuerkurve mit ebenfalls einem Anfangsbereich und einem Endbereich für einen Bolzen vorgesehen sein, wobei die Steuerkurve im Endbereich eine Ausnehmung derart aufweist, dass ebenfalls der mit dem Aufstellelement bewegte Bolzen aufgrund der in einer Unfallsituation vorliegenden Kraftverhältnisse sich nicht mehr zurück in den Anfangsbereich bewegen kann bzw. eine solche Zurückbewegung sehr unwahrscheinlich ist. Hierbei kann es in bevorzugter Weise vorgesehen sein, dass das die Steuerkurve aufweisende Element oder Bauteil in Richtung auf die inaktive Position federvorbelastet ist. Bei den Ausführungsvarianten mit einer Kulisse kann in gleicher Weise vorteilhaft vorgesehen sein, dass das die Kulisse aufweisende Element oder Bauteil in Richtung auf die inaktive Position federvorbelastet ist. Ferner kann in einer weiteren Variante eine Kulisse in einer in Anlehnung an ein Schlüsselloch gestalteten Weise mit einem eine verringerte lichte Öffnung aufweisenden Anfangsbereich und einem eine vergrößerte lichte Öffnung aufweisenden Endbereich derart ausgeformt sein und mit einem Bolzen zusammenwirken, dass der Bolzen in einem ersten axialen Bereich einen kleineren Durchmesser aufweist und mit dem Anfangsbereich zusammenwirkt und das der Bolzen beim Erreichen des Endbereichs der Kulisse (was bei einer Bewegung des Aufstellelements in Richtung auf die aktive Position zu erfolgt) aufgrund einer Federvorspannung des Bolzens mit einem zweiten axialen und einen größeren Durchmesser aufweisenden Bereich des Bolzens in den Endbereich gedrückt wird. In einer weiteren Ausführungsvariante der Rückhaltevorrichtung zur alternativen Realisierung eines Verriegelungsmittels kann das Aufstellelement mit dem Oberteil, insbesondere mit Löchern oder Ausnehmungen, derart zusammenwirken, dass beim Erreichen der aktiven Position eine Zurückbewegung des Aufstellelements verhindert wird. Es kann ferner vorgesehen sein, dass Teilaspekte der verschiedenen Varianten der Rückhaltevorrichtung mit einem Verriegelungsmittel miteinander kombiniert werden können; so kann etwa die zuletzt genannte Variante (Löcher oder Ausnehmungen im Aufstellelement) mit den anderen Varianten kombiniert werden.

Ausführungsbeispiele der Erfindung sind in der Zeichnung dargestellt und in der nachfolgenden Beschreibung näher erläutert.
**Figur 1** zeigt schematisch eine Seitenansicht eines erfindungsgemäßen Fahrzeugsitzes sowie eine perspektivische Ansicht einer Sitzschale bzw. eines Polsterträgers eines Sitzteils eines erfindungsgemäßen Fahrzeugsitzes mit einer teilweise aufgeschnittenen Darstellung einer nicht zur Erfindung gehörenden Rückhaltevorrichtung.
**Figur 2** zeigt schematisch eine perspektivische Ansicht einer Sitzschale bzw. eines Polsterträgers eines Sitzteils zusammen mit den Sitzseitenteilen des Sitzteils des erfindungsgemäßen Fahrzeugsitzes mit einer Darstellung der erfindungsgemäßen Rückhaltevorrichtung.

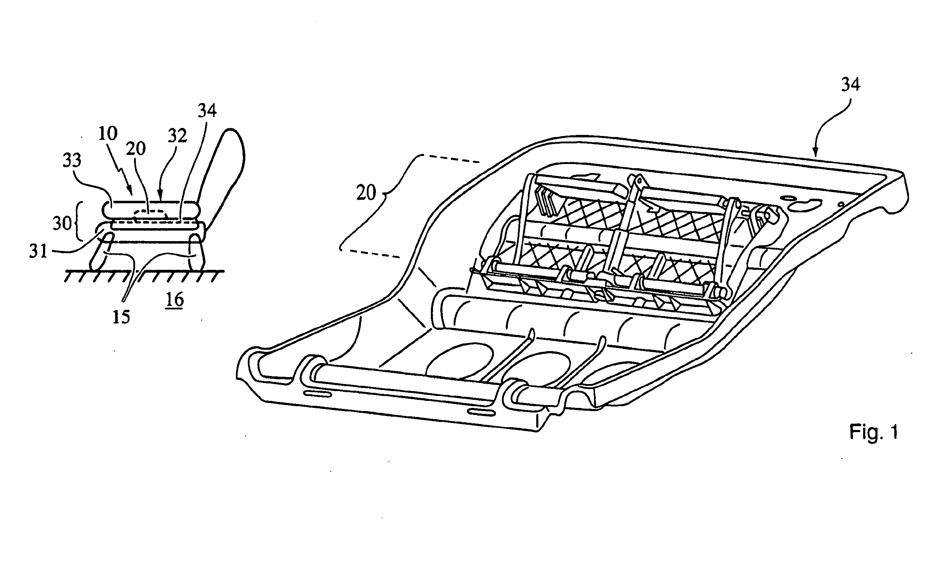

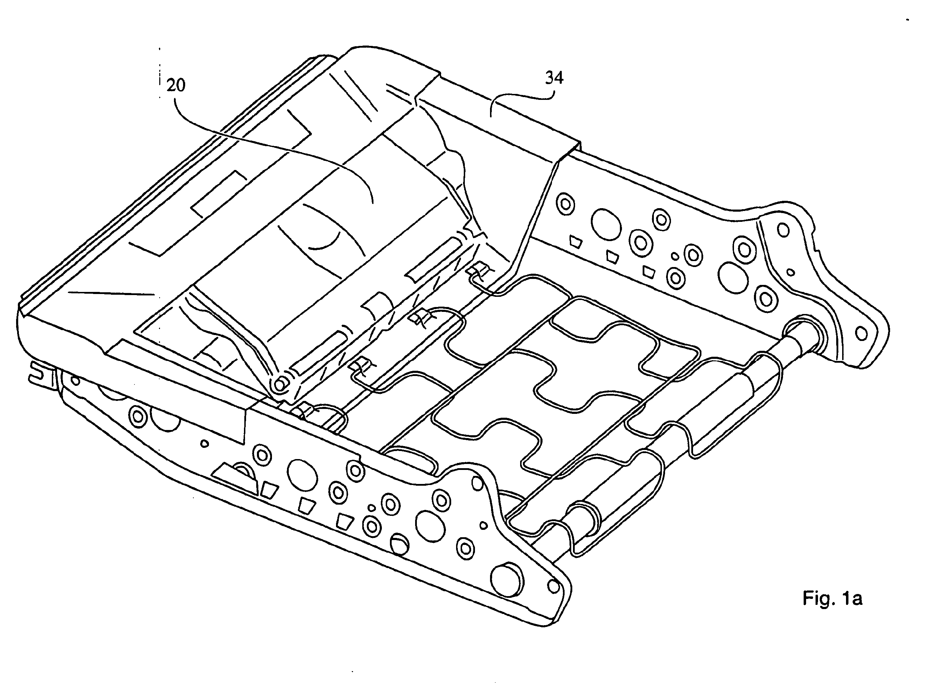

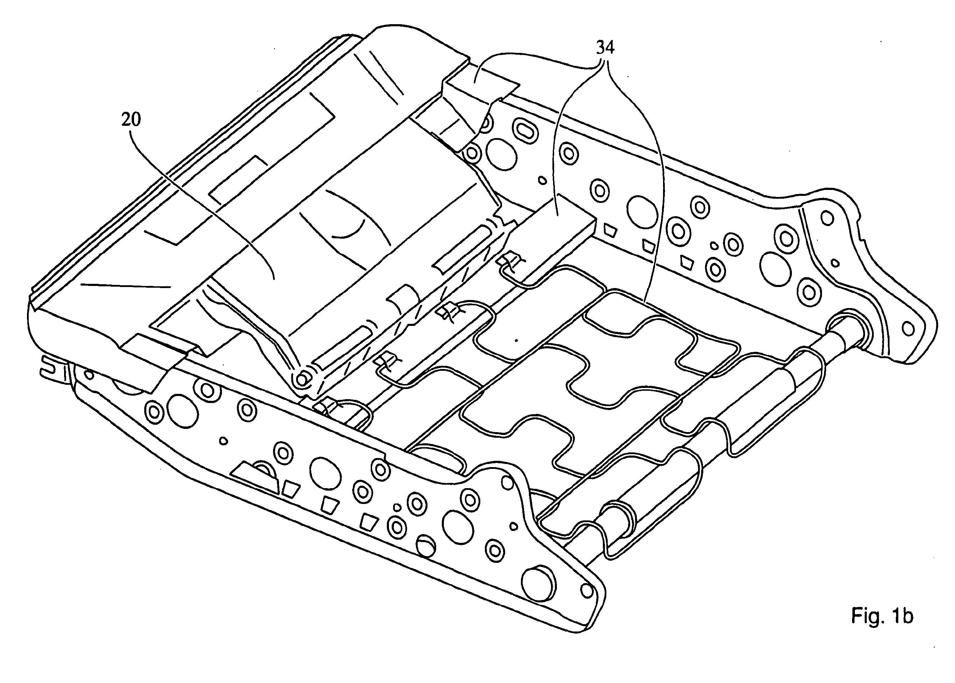

**Figuren 1** **a und 1 b** zeigen schematisch perspektivische Ansichten verschiedener Ausführungen eines Polsterträgers eines Sitzteils zusammen mit den Sitzseitenteilen des Sitzteils und der Rückhaltevorrichtung.

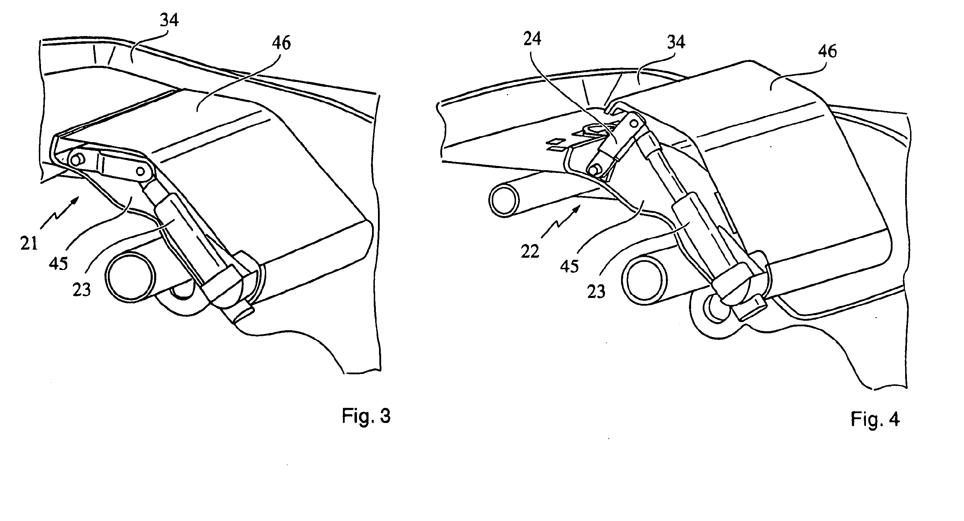

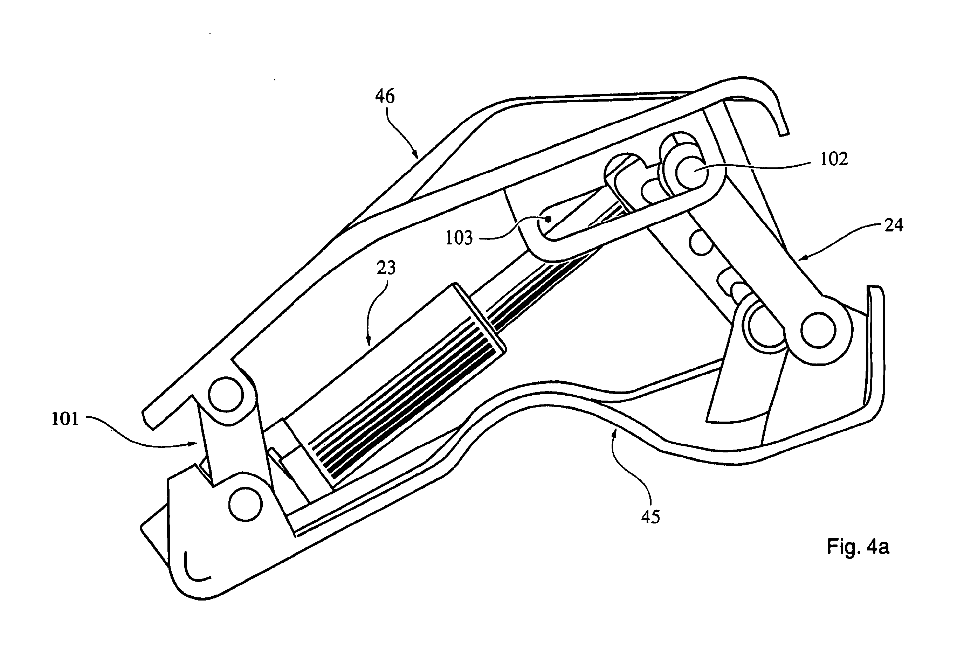

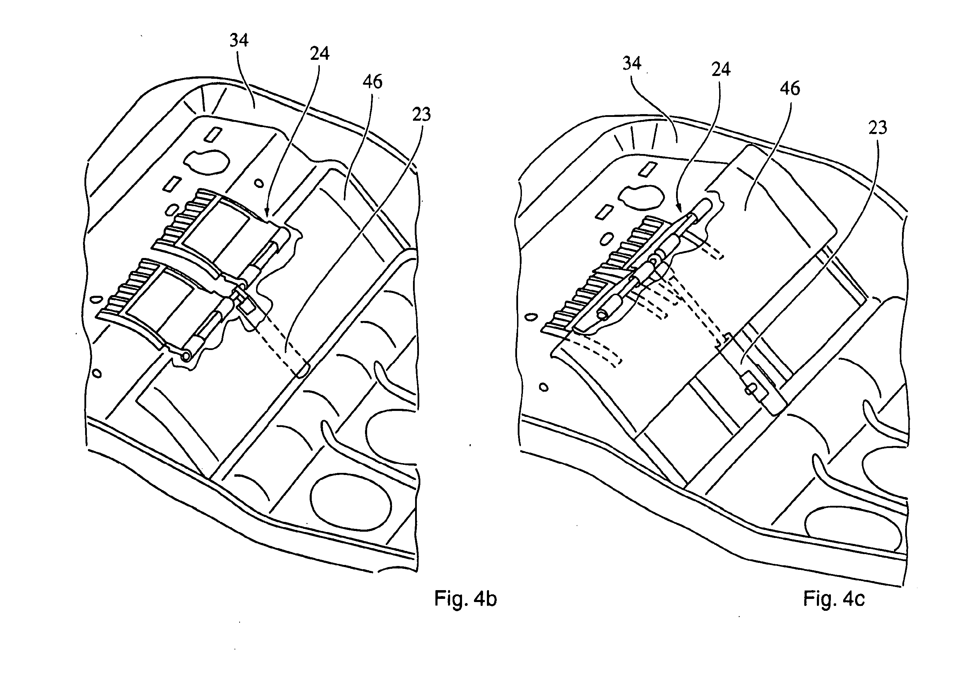

**Figuren 3 und 4** zeigen schematisch in perspektivischer Ansicht eine Sitzschale bzw. einen Polsterträger eines nicht zur Erfindung gehörenden Fahrzeugsitzes mit einer Ausführungsform der Rückhaltevorrichtung in ihrer inaktiven Position (Figur 3) bzw. in ihrer aktiven Position (Figur 4).
**Figuren 4a****,** **4b und 4c** zeigen nicht zur Erfindung gehörende Ausführungsvarianten der Rückhaltevorrichtung in Seitenansicht bzw. in perspektivischer Darstellung.

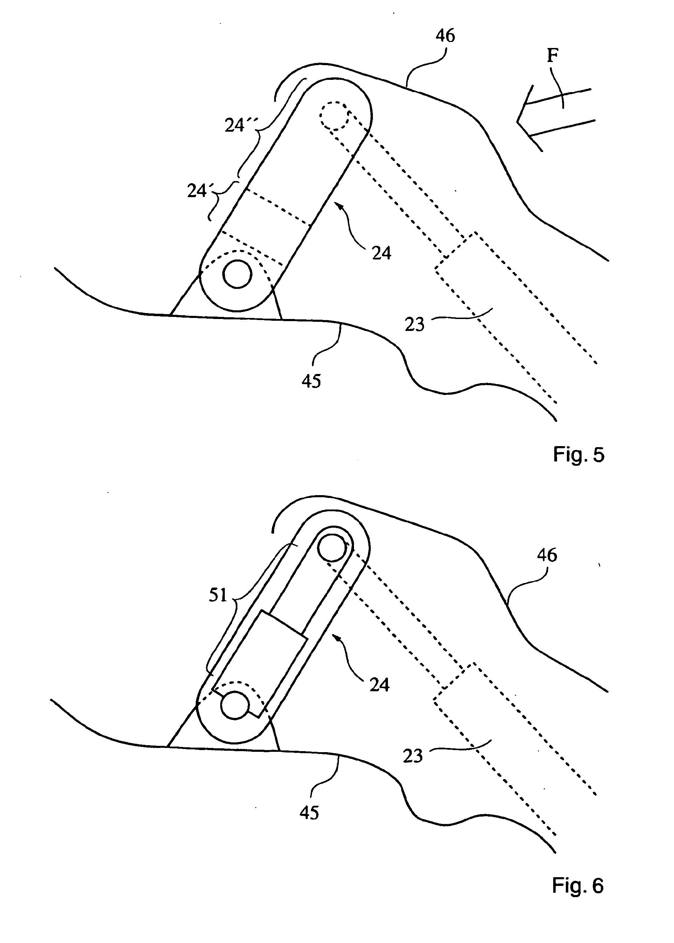

**Figuren 5, 6****,** **7 und 7a** zeigen schematisch in Seitenansicht jeweils einen Ausschnitt der nicht zur Erfindung gehörenden Rückhaltevorrichtung mit jeweils einer Ausführungsform eines Energiedissipationsmittels.

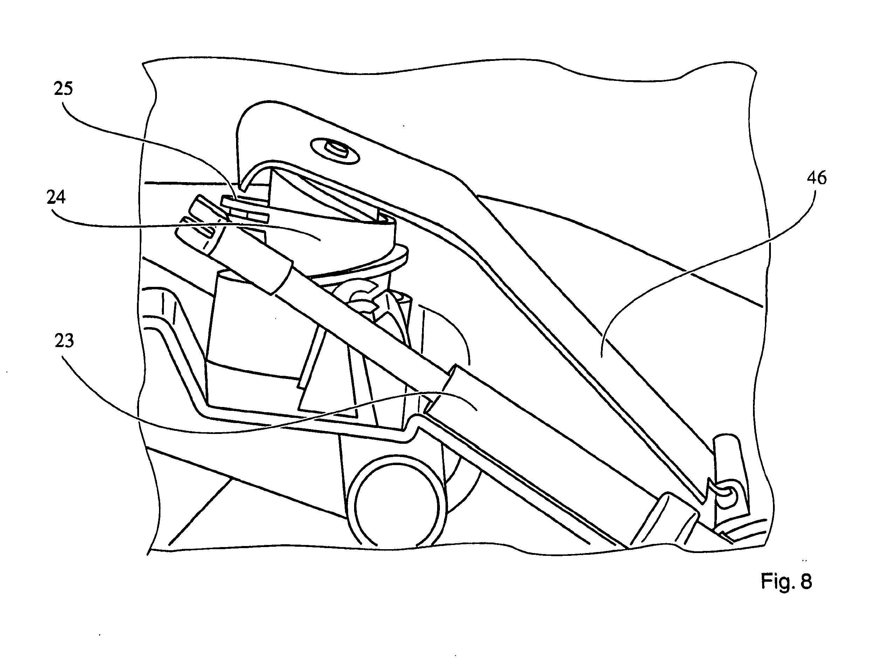

**Figur 8** zeigt schematisch in Seitenansicht einen Ausschnitt der erfindungsgemäßen Rückhaltevorrichtung mit einer weiteren Ausführungsform eines Aufstellelements.

In Figur 1 ist (im linken Teil der Figur) schematisch eine Seitenansicht eines erfindungsgemäßen Fahrzeugsitzes 10 dargestellt. Der Fahrzeugsitz 10 umfasst ein Sitzteil 30 sowie in der Regel auch ein nicht mit einem Bezugszeichen versehenes Lehnenteil. Das Sitzteil 30 weist insbesondere eine rahmenartige Struktur mit wenigstens zwei seitlichen Sitzseitenteilen 31 auf. Innerhalb dieser rahmenartigen Struktur weist das Sitzteil 30 ein Sitzschale 34 bzw. ein Polsterträger 34 auf. Mit der Sitzschale 34 bzw. mit dem Polsterträger 34 ist eine Polsterung 33 bzw. ein Sitzkissen 33 verbunden. Das Sitzteil 30 ist zur Bodenbaugruppe 16 des Fahrzeuginnenraums bzw. zur Karosseriestruktur 16 des Fahrzeugs hin mittels eines Sitzunterbaus 15 angebunden. Mittels des Sitzunterbaus 15 kann es vorgesehen sein, dass der komplette Fahrzeugsitz 10 längsverstellbar und/oder höhen- und/oder neigungsverstellbar angebunden ist. Hierzu ist im linken Teil der Figur 1 der Sitzunterbau 15 als angedeutete Lenker dargestellt, die durch Drehung bzw. Schwenkung eine entsprechende Sitzeinstellung bewirken können. Die Polsterung 33 weist eine Sitzfläche 32 auf, auf der ein Benutzer des Fahrzeugsitzes 10 bzw. ein Fahrzeuginsasse bzw. ein Passagier Platz nehmen kann. Es ist besonders bevorzugt vorgesehen, dass die Sitzschale 34 bzw. der Polsterträger 34 samt der Polsterung 33 und der Sitzfläche 32 gegenüber dem restlichen Sitzteil 30 höhen- und/oder neigungsverstellbar ausgebildet ist.

Das Sitzteil 30 des Fahrzeugsitzes 10 kann als beispielsweise als ein 2-fach oder 4-fach oder 6-fach oder 8-fach oder mehrfach verstellbarer Unterbau vorgesehen sein, wodurch beispielsweise die Sitzhöhe und/oder die Sitzneigung und/oder die Sitzlängsverstellung und/oder die Sitzlängeneinstellung (Oberschenkelauflagelänge) einstellbar ist. Der Polsterträger ist in den Figuren weitgehend als eine separate und ungeteilte Sitzwanne 34 bzw. als ein entsprechender Polsterträger 34 dargestellt, kann aber auch als ein geteilter Polsterträger 34 bzw. eine entsprechende Sitzwanne 34 vorgesehen sein, wie anhand der in den Figuren 1 a und 1 b dargestellten Beispiele von Ausführungsvarianten eines Polsterträgers 34 erkennbar ist. Insbesondere wird als Polsterträger eine einzige Strukturkomponente oder eine Mehrzahl von Strukturkomponenten des Sitzteils verstanden, welche zumindest an eine Polsterung des Sitzes angrenzt bzw. in der Nähe einer solchen Polsterung vorgesehen ist, beispielsweise etwa im maximalen Abstand von ca. 10 mm einer solchen Polsterung, und wobei eine solche Polsterung vom Polsterträger bzw. seinen Komponenten getragen oder gestützt bzw. gehalten wird. Als Polsterträger kommt hierbei etwa ein durchgehender Polsterträger (Polsterwanne bzw. Sitzwanne) (Figur 1) oder eine geteilte Sitzwanne bzw. Teilsitzwanne (Figur 1 a) in Frage oder aber auch Strukturelemente wie beispielsweise rohrartige oder offene Versteifungselemente (Figur 1 b) als Teil des Polsterträgers. Erfindungsgemäß ist zwischen dem Polsterträger 34 und der Polsterung 33 eine Rückhaltevorrichtung 20 angeordnet, mittels der ein Durchrutschen des Benutzers des Fahrzeugsitzes 10 bei einer Unfallverzögerung vermieden oder reduziert werden kann. Die Rückhaltevorrichtung 20 ist als eine aktive Anti-Submarining-Vorrichtung vorgesehen und ist besonders bevorzugt als ein sogenanntes Addon-Element ausgebildet, das wahlweise in den Fahrzeugsitz 10 integriert werden kann oder auch nicht (je nach Ausstattungswunsch des Kunden bzw. den Vorgaben des Herstellers). Eine solche aktive Anti-Submarining-Komponente kann einen wesentlichen Beitrag zur Verbesserung des Insassenschutzes beim Frontalcrash bieten. Die Einheit kann bevorzugt als Add-on-Element in nahezu allen Vordersitzen sowie Rücksitzen eingesetzt werden. Hierbei kann die Rückhaltevorrichtung 20 besonders bevorzugt in einem sogenannten JIT-Werk (Just-in-Time-Werk), d.h. in vergleichsweise großer Nähe zur Endmontage des Fahrzeugs bzw. des kompletten Sitzmoduls, dadurch in den Fahrzeugsitz 10 integriert werden, dass lediglich eine Befestigung der Rückhaltevorrichtung 20 am Polsterträger 34 erfolgt, beispielsweise über eine bekannte Befestigungstechnik wie Clipsen, Schrauben, Nieten, Kleben oder dergleichen. Besonders vorteilhaft ist hierbei, dass bevorzugt keinerlei Schweißarbeiten anfallen sowie keinerlei Modifikationen an Strukturteilen des Sitzteils 30 erforderlich sind. Ferner ist es besonders vorteilhaft, dass eine identische Sitzschale 34 bzw. ein identischer Polsterträger 34 sowohl für einen Fahrzeugsitz 10 mit der Rückhaltevorrichtung 20 als auch für einen Fahrzeugsitz 10 ohne die Rückhaltevorrichtung 20 verwendet werden kann. Hierdurch können die Produktionskosten für solche Fahrzeugsitze 10 erheblich reduziert werden bzw. es wird der logistische Mehraufwand für einen flexiblen Einsatz der Rückhaltevorrichtung 20 auf beliebigen solcher Fahrzeugsitzen stark reduziert.

Im rechten Teil der Figur 1 ist schematisch eine perspektivische Ansicht einer Sitzschale 34 bzw. eines Polsterträgers 34 eines Sitzteils 30 eines Fahrzeugsitzes 10 mit einer teilweise aufgeschnittenen Darstellung einer nicht zur Erfindung gehörenden Rückhaltevorrichtung 20 dargestellt.

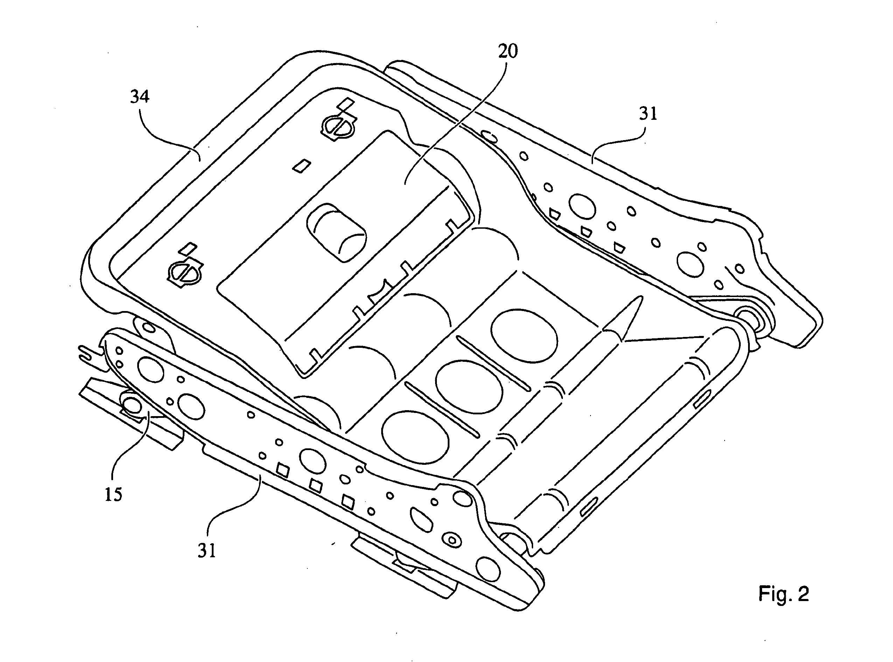

Figur 2 zeigt schematisch eine perspektivische Ansicht einer Sitzschale 34 bzw. eines Polsterträgers 34 eines Sitzteils 30 zusammen mit den Sitzseitenteilen 31 des Sitzteils 30 des erfindungsgemäßen Fahrzeugsitzes 10 mit einer Darstellung der erfindungsgemäßen Rückhaltevorrichtung 20. Erkennbar ist aus der Figur 2 ebenfalls ein Teil des Sitzunterbaus 15, der in diesem Fall als Verstelllenker zur Höhen- und/oder Neigungseinstellung des Fahrzeugsitzes 10 ausgebildet ist und mit den Sitzseitenteilen 31 verbunden ist.

Figuren 3 und 4 zeigen schematisch und aufgeschnitten in perspektivischer Ansicht die Sitzschale 34 des nicht zur Erfindung gehörenden Fahrzeugsitzes 10 mit einer Ausführungsform der Rückhaltevorrichtung 20 in ihrer inaktiven Position 21 (Figur 3) bzw. in ihrer aktiven Position 22 (Figur 4). Erkennbar ist, dass in der dargestellten Ausführungsform der Rückhaltevorrichtung 20 dieselbe ein Gehäuse aus einer Oberschale 46 und einer Unterschale 45 aufweist. Das Gehäuse der Rückhaltevorrichtung 20 kann beispielsweise ein Stahlmaterial, ein Aluminiummaterial, ein Magnesiummaterial, ein Kunststoffmaterial oder eine Kombination solcher Materialien umfassen. Erkennbar ist ferner, dass in der aktiven Position 22 (Figur 4) die Oberschale 46 mittels eines Aktuierungsmittels 23 nach oben hin, d.h. zur Sitzfläche 32 (die jedoch in Figur 4 nicht dargestellt ist) ausgestellt ist. Hierdurch erfährt der nicht dargestellte Beckenknochen (bzw. der Sitzbeinhöcker) eines Sitzbenutzers vor allem im Falle eines Frontalunfalls zu einem früheren Zeitpunkt einen größeren Widerstand, so dass ein Durchrutschen des Beckens bzw. der Hüfte des Benutzers (Vorverlagerung (Verschiebung in X-Richtung) des sogenannten H-Punktes bzw. Hip-Punktes bzw. Hüftpunktes) vermieden bzw. dessen Wahrscheinlichkeit oder Ausmaß erheblich reduziert werden kann. Hierdurch können in vorteilhafter Weise bevorzugt im Armaturenbrett angeordnete Knieairbags und/oder Maßnahmen zur Gurtstraffung entfallen oder reduziert werden. Dies kann insbesondere für 3-türige Fahrzeuge besonders vorteilhaft sein.

Zur Aufstellung der Oberschale 46 der Rückhaltevorrichtung 20 umfasst diese ein in den Figuren 3 und 4 lediglich als Hebel dargestelltes Aufstellelement 24, welches von dem Aktuierungsmittel 23 angetrieben wird. In dieser Ausführungsform der Rückhaltevorrichtung 20 wird das Aufstellelement 24 bei der Bewegung zwischen der inaktiven Position 21 der Rückhaltevorrichtung 20 und der aktiven Position 22 der Rückhaltevorrichtung 20 um eine im wesentlichen horizontale (parallel zur Sitzfläche 32 verlaufende) Drehachse gedreht bzw. geschwenkt. Hierdurch stellt sich das Aufstellelement 24 von einer der inaktiven Position 21 der Rückhaltevorrichtung 20 entsprechenden eingezogenen Position 21' in eine der aktiven Position 22 der Rückhaltevorrichtung 20 entsprechenden ausgestellten Position 22' ein, so dass die Oberschale 46 ausgestellt ist und hierdurch eine relativ große Auftrefffläche für den Beckenbereich eines Benutzers in einer Unfallsituation zur Verfügung stellt. Eine alternative Ausführungsform des Aufstellelements 24 ist eine im wesentlichen plattenförmige Ausgestaltung des Aufstellelementes 24. Einer im wesentlichen plattenförmige Ausgestaltung des Aufstellelements 24 entspricht ein im wesentlichen flächig sich erstreckendes Aufstellelement 24, wobei ein solches Element beispielsweise wenigstens doppelt so lang (in der Regel etwa in Y-Richtung ausgerichtet) wie breit (in der Regel in seiner inaktiven Position etwa in X-Richtung ausgerichtet) ist und eine Tiefe von maximal einem Drittel seiner Breite aufweist. Alternativ zu einem solchen im wesentlichen plattenförmigen Element als Aufstellelement kann vorgesehen sein, dass ein Rohr mit aufgeschweißtem Blech oder ein anderes Strukturelement der Rückhaltevorrichtung 20 als Aufstellelement 24 dient.

Das Aufstellelement 24 ist im Ausführungsbeispiel gemäß Figuren 3 und 4 drehbar bzw. schwenkbar an der Unterschale 45 oder direkt an dem Polsterträger 34 angelenkt. Diese zuletzt genannte alternative Anbindung des Aufstellelements 24 ist insbesondere dann vorteilhaft, wenn die Unterschale 45 nicht vorhanden ist. Die Anbindung des Aufstellelements 24 an der Unterschale 45 und/oder am Polsterträger 34 kann insbesondere mittels einer oder mittels zweier oder mittels dreier Lagerstellen oder auch mittels mehr als drei Lagerstellen vorgesehen sein. Vorteilhafterweise sind zwei Lagerstellen an den seitlichen Enden des Aufstellelements 24 (in Y-Richtung) vorgesehen.

Das Aufstellelement 24 und/oder das Oberteil 46 kann bevorzugt eine Mehrzahl von Materialzonen zur Herbeiführung eines vorgegebenen Deformationsverhaltens bzw. eines Energiedissipationsverhaltens aufweisen. Hierbei weisen unterschiedliche Materialzonen insbesondere unterschiedliches Deformationsverhalten auf. Alternativ oder kumulativ ist das Aufstellelement 24 und/oder das Oberteil 46 zumindest teilweise reversibel deformierbar vorgesehen, wobei das Aufstellelement 24 vorzugsweise einen Stoßdämpfer oder einen Gasdruckdämpfer aufweist. Hierdurch kann für unterschiedlich starke Unfallsituationen bzw. für unterschiedliche zu übertragende Kräfte zwischen dem Benutzer des Fahrzeugsitzes und dem Fahrzeugsitz ein unterschiedliches Deformationsverhalten realisiert werden. Beispielswiese kann die Deformation des Aufstellelements 24 mittels Gasdruckdämpfer vorgegeben zumindest teilweise reversibel vorgesehen sein und es kann die Deformation des Oberteils 46 mittels elastischer Deformation zumindest teilweise reversibel vorgesehen sein.

Erfindungsgemäß und in Figur 8 anhand einer Ausführungsform des Aufstellelements schematisch dargestellt, ist das Aufstellelement 24 um eine im wesentlichen vertikale Drehachse (im wesentlichen senkrecht auf der Sitzfläche 32 stehend) drehbar oder zumindest in Teilen drehbar. Hierbei weist das Aufstellelement 24 beispielsweise zwei insbesondere becherartig ausgebildete Hubkolben auf, die eine spiralförmige Zapfen-Kulissen-Führung aufweisen sowie relativ zu einander drehbar sind und die bei einer Drehung eine axiale Ausstellbewegung entlang beispielsweise der gemeinsamen Mittelachse ausführen. Alternativ zu einer Drehung um eine gemeinsame Mittelachse kann auch eine exzentrische Drehung des einen Hubkolbens relativ zu den Hubkolben oder relativ zu einem anderen Hubkolben vorgesehen sein. Hierdurch kann der für die Rückhaltevorrichtung 20 benötigte Bauraum sowie das Gewicht reduziert werden. Eine Verriegelung des Aufstellelements 24 in der ausgestellten Position kann über eine bevorzugt asymmetrische Verzahnung (als Verriegelungsmittel 25) zwischen den beiden drehbar zueinander angeordneten Teilen realisiert sein. Weiterhin kann ein Energiedissipationsverhalten eines solchermaßen vorgesehenen Aufstellelements 24 relativ einfach dadurch bewerkstelligt werden, dass im zentralen Bereich der becherartig ausgebildeten Hubkolben entweder ein Stoßdämpferelement oder ein Gasdruckdämpfer oder ein Deformationsmaterial wie etwa ein Metallschaum, eine Wabenstruktur oder ein ähnliches bei einer Deformation energiedissipierendes Material angeordnet ist. Bei der dritten Ausführungsform des Aufstellelements 24 können auch zwei oder mehr Hubkolbeneinheiten vorgesehen sein.

In der Figur 4a ist eine nicht zur Erfindung gehörende Variante der Rückhaltevorrichtung 20 mit einer variablen Anbindung des Oberteils 46 in Seitenansicht dargestellt. Die variable Anbindung des Oberteils 46 der Rückhaltevorrichtung 20 wird im dem Aufstellelement 24 abgewandten Bereich durch einen Hebel 101 realisiert, der in der Ausgangsstellung (inaktive Position der Rückhaltevorrichtung 20) zu dem Aufstellelement 24 hin eingestellt bzw. geschwenkt ist. Bei einer Aktivierung der Rückhaltevorrichtung 20 wird sowohl der Hebel 101 als auch das Aufstellelement 24 in entgegengesetzter Drehrichtung gedreht, wobei das Oberteil 46 sowohl im Bereich des Aufstellelementes 24 (vorne) als auch im dem Aufstellelement 24 abgewandten Bereich vom Polsterträger 34 abhebt bzw. aufstellt, wodurch eine besonders gute Rückhaltewirkung erzielt wird. Bei der Aktivierung der Rückhaltevorrichtung 20 wird ebenfalls ein Zapfen 102 des Aufstellelements innerhalb eines Langlochs 103 in X-Richtung bewegt. Ein solches Langloch 103 kann mit Verrastausnehmungen ausgebildet sein, die zusammen mit dem Zapfen 102 ein Beispiel für ein Verriegelungsmittel 25 bilden. Bei einer nicht dargestellten Variante der Rückhaltevorrichtung 20 ist das Oberteil 46 wie in Figur 4a durch den Hebel 101 variabel angebunden, jedoch ist der Hebel in der inaktiven Position in Richtung von dem Aufstellelement 24 weg gedreht eingestellt und es ist im Bereich des Aufstellelements 24 kein Langloch 103, sondern eine lediglich schwenkbare Lagerung des Oberteil 46 vorhanden, so dass der Hebel 101, das Oberteil 46 und das Aufstellelement 24 ein Viergelenk bilden. Hierdurch kann eine Bauraumoptimierung bewirkt werden. Die Viergelenk-Kinematik (bzw. eine entsprechende Kinematik mit variabler Anbindung des Oberteils 46 entsprechend Figur 4a) weist gegenüber der in Figur 3 und 4 dargestellten Ausführungsform den Vorteil auf, dass die Oberschale 46 des Gehäuses der Rückhaltevorrichtung 20 auch im hinteren Bereich angehoben wird. Dies kann zu einer besseren Rückhaltefunktionalität beitragen. Eine solche Viergelenk-Kinematik (bzw. eine entsprechende Kinematik mit variabler Anbindung des Oberteils 46 entsprechend Figur 4a) kann sowohl parallel zur Fahrtrichtung als auch quer dazu oder auch diagonal angeordnet sein.

In den Figuren 4b (inaktive Position) und 4c (aktive Position) ist in perspektivischer Ansicht eine weitere nicht zur Erfindung gehörende Variante der Rückhaltevorrichtung 20 mit dem sich bei dieser Variante im wesentlichen in lediglich angedeuteten Linearführungen linear beweglichen Oberteil 46 dargestellt, welches während seiner linearen oder zumindest im wesentlichen linearen Bewegung das Aufstellelement 24 aufstellt. Hierbei wird das Oberteil 46 von dem beispielsweise als Spiralfeder vorgesehenen Aktuierungsmittel 23 angetrieben oder es ist eine andere Form des Aktuierungsmittels 23 vorgesehen, beispielsweise ein pyrotechnisch arbeitender Linearakturator.

Das Aktuierungsmittel 23 kann bevorzugt als eine pyrotechnische Einheit bzw. als ein pyrotechnischer Aktuator, bevorzugt ein Linearaktuator, ausgebildet sein. Es ist jedoch alternativ oder kumulativ auch möglich, dass das Aktuierungsmittel 23 als ein federvorgespanntes Element ausgebildet ist (mit mechanisch gespeicherter Aktuierungsenergie) oder als eine elektromagnetische Einheit ausgebildet ist. Hierbei ist es besonders vorteilhaft vorgesehen, dass die Wirkrichtung des Aktuierungsmittels 23 trotz der in Bezug auf den Benutzer des Fahrzeugsitzes 10 relativ nahen Anordnung des Aktuierungsmittels 23 zu keiner Zeit auf den Benutzer bzw. auf sensible Körperteile des Benutzers (wie etwa der Rumpf bzw. der Beckenbereich) gerichtet ist. Hierdurch kann das Verletzungsrisiko, beispielsweise im Falle eines Materialdefekts erheblich reduziert werden. Die Wirkrichtung des Aktuierungsmittels 23 kann entweder im wesentlichen parallel zur Fahrzeugrichtung vorgesehen sein oder aber quer dazu eingestellt sein oder auch diagonal eingestellt sein.

Am Aufstellelement 24, insbesondere an dessen oberen Ende, kann ein nicht dargestelltes Verriegelungsmittel befestigt sein. Bevorzugt ist ein solches Verriegelungsmittel zur Gewährleistung einer guten Schutzfunktion der Rückhaltevorrichtung 20 vorgesehen, so dass das System bei einer Aktuierung des Aktuierungsmittels 23 sofort gegen eine Bewegung zurück in die inaktive Position 21 mittels des Verriegelungsmittels verriegelt wird. Hierdurch wird eine maximal mögliche Schutzwirkung in allen denkbaren Situation erreicht, auch dann, wenn die eigentliche vollständig ausgestellte Endposition der Rückhaltevorrichtung 20 nicht erreicht wird.

Gemäß der vorliegenden Erfindung weist die Rückhaltevorrichtung 20 im Bereich des Aufstellelements 24 und/oder im Bereich des Oberteils 46 (bzw. der Abdeckung 46 bzw. des Gehäusedeckels 46) ein Deformationselement als Energiedissipationsmittel auf. Hierzu kann beispielsweise die in der aktiven Position 22 der Rückhaltevorrichtung 20 eingestellte (d.h. ausgestellte) Oberschale 46 kann derart ausgestaltet sein, dass die beim Frontcrash auftretenden Kräfte auf das Becken des Insassen, die durch das Auftreffen des Insassen auf die Sitzwanne 34 bzw. Sitzschale 34 bzw. Polsterträger 34 bzw. durch das Auftreffen des Insassen auf die Oberschale 46 entstehen, durch gezielte Energieabsorption etwa der Oberschale 46 selbst merklich reduziert werden. Weiterhin kann auch das Aufstellelement 24 in seiner Struktur derart vorgesehen sein (etwa durch Bleche, Schäume jeglicher Art, Wabenkonstruktionen oder dergleichen), dass die (maximal) auftretenden Kräfte - speziell die Beckenkräfte - reduziert werden. Ferner ist es auch möglich, dass ein weiteres Deformationsmittel in einem Bereich der Rückhaltevorrichtung 20 vorgesehen ist, der nicht zum Aufstellelement 24 bzw. zum Oberteil 46 gehört.

In den Figuren 5, 6, 7 und 7a ist jeweils schematisch in Seitenansicht ein Ausschnitt der nicht zur Erfindung gehörenden Rückhaltevorrichtung 20 mit einer Ausführungsform eines solchen Energiedissipationsmittels dargestellt, wobei jeweils das Unterteil 45, das Oberteil 46, das Aufstellelement 24 und (lediglich in gestrichelter Linie angedeutet) das Aktuierungsmittel schematisch dargestellt ist.

In der Ausführungsform des Energiedissipationsmittels bzw. des Deformationselements gemäß der Figur 5 ist ein solches Energiedissipationsmittel als ein Deformationselement vorgesehen, welches als ein erster Materialbereich 24' innerhalb des Aufstellelements 24 ausgebildet ist. Hierbei handelt es sich bei dem ersten Materialbereich 24' beispielsweise um einen Materialbereich, der im Vergleich zu einem zweiten Materialbereich 24" des Aufstellelements 24 weicher bzw. stärker kompressibei ausgebildet ist. Dies kann beispielsweise dadurch erfolgen, dass im ersten Materialbereich 24' ein gegenüber dem zweiten Materialbereich unterschiedliches, nämlich gegenüber einer plastischen Deformation weicheres Material vorgesehen ist. Ein ähnlicher Effekt wird durch eine andere Materialstruktur innerhalb des ersten Materialbereichs 24' gegenüber dem zweiten Materialbereich 24" bewirkt. Hierdurch ist es beispielsweise möglich, dass das Aufstellelement 24 bei einer Krafteinwirkung aufgrund einer Beschleunigungskraft eines Sitzbenutzers in einer Unfallsituation (angedeutet durch einen Pfeil F in Figur 5) im ersten Materialbereich 24' gestaucht wird, so dass während des Unfallhergangs Bewegungsenergie durch eine plastische Verformung des ersten Materialbereichs 24' umgesetzt wird, so dass auf den Benutzer und auf die restliche Sitzstruktur kleiner Kräfte bzw. kleinere Spitzenwerte der Kraft wirken, wodurch zum einen die Gesundheit des Benutzers geschont wird und zum anderen die Belastung der Sitzstruktur reduziert wird, so dass diese kostengünstiger ausgestaltet werden kann. Alternativ ist es auch möglich, dass eine Mehrzahl von Materialbereichen 24', 24" innerhalb des Aufstellelements 24 vorgesehen sind, so dass in einer ersten Unfallphase der erste Materialbereich 24' verformt wird, wobei in einer zweiten Unfallphase der zweite Materialbereich 24" (beispielsweise aufgrund einer höheren wirkenden Kraft) verformt wird. Hierdurch ist es möglich, dass ein gestuftes Deformationsverhalten des Deformationselements 24', 24" realisiert wird, das besonders gut und flexibel auf unterschiedliche Unfallsituation und Kräfteverhältnisse (beispielsweise hervorgerufen durch unterschiedlich große und schwere Benutzer sowie durch unterschiedliche Sitzpositionen derselben vor dem Unfallhergang) reagiert. Eine solche Mehrzahl von Materialbereichen 24', 24" kann beispielsweise in der Form einer Stahl-Aluminium-Kombination oder in Form einer Magnesium-Aluminium-Kombination vorgesehen sein.

In Figur 6 ist eine Ausführungsvariante des Deformationselements als Stoßdämpfer 51 bzw. Gasdruckdämpfer 51 schematisch in Seitenansicht dargestellt. Hierdurch ist eine teilweise reversible, d.h. zurückfedernde Bewegung, des Aufstellelements 24 aufgrund einer unfallbedingten Belastungssituation möglich.

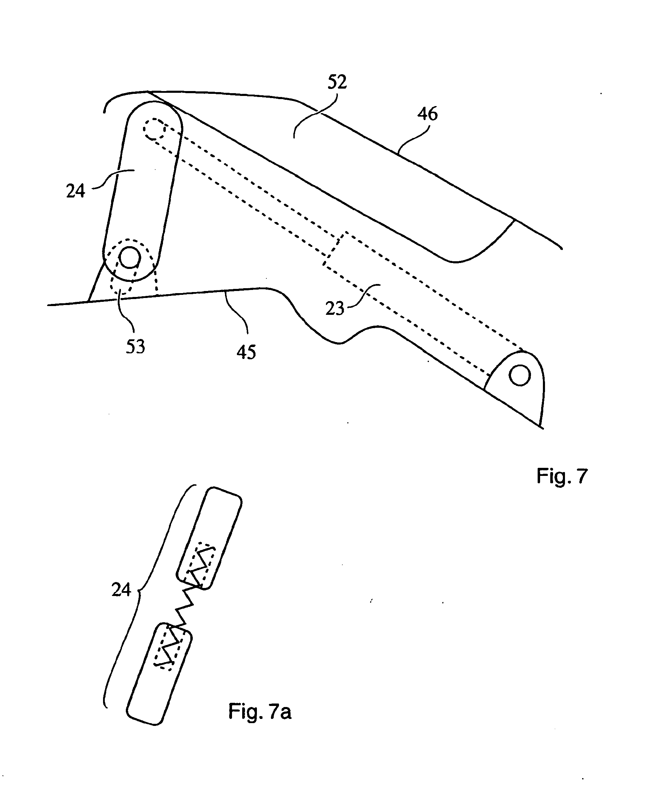

In Figur 7 ist eine Ausführungsvariante des Deformationselements als ein mit dem Oberteil 46 verbundenes (bzw. als ein Teil des Oberteils 46 vorgesehenes) Deformationselement dargestellt, das mit dem Bezugszeichen 52 bezeichnet ist. Bei einer auf das Oberteil 46 seitens des Benutzers einwirkenden Kraft kann das Oberteil 46 zum einen selbst deformiert werden (nicht dargestellt) und zum anderen durch eine Stauchung des Aufstellelements 24 (beispielsweise gemäß der Ausführungsform nach Figur 5 oder 6) nach unten gedrückt werden, wodurch das mit dem Bezugszeichen 52 bezeichnete Deformationselement plastisch verformt wird. Alternativ dazu kann als weitere Ausführungsform eines Deformationselements ein Langloch 53 mit einem die Bewegung eines Lagerelements (hier beispielsweise ein Bolzen) normalerweise hemmenden Schersteg (nicht detailliert dargestellt) ausgebildet sein. Im Fall eines Unfalls wird ein solcher Steg schlagdeformiert.

In Figur 7a ist lediglich das Aufstellelement 24 in einer Schnittdarstellung dargestellt, wobei das Aufstellelement 24 als (im dargestellten Beispiel) aus zwei miteinander durch ein Federelement als Energiedissipations- bzw. Energiespeichermittel verbundenen Teilen aufgebaut dargestellt ist.

Es ist ebenfalls möglich, dass die Ausführungsvarianten gemäß der Figur 5 und/oder gemäß der Figur 6 und/oder gemäß der Figur 7 und/oder gemäß der Figur 7a miteinander kombiniert werden. Hierdurch ist es möglich, besonders flexibel auf unterschiedliche Belastungssituationen zu reagieren.

In Figur 8 ist schematisch in Seitenansicht ein Ausschnitt der erfindungsgemäßen Rückhaltevorrichtung 20 mit einem um eine zur Sitzfläche im wesentlichen senkrecht stehende Drehachse zumindest teilweise drehbaren Aufstellelement 24 dargestellt. Bei den spiralförmig gegeneinander drehbaren becherartigen Zylinderelementen kann im zentralen Bereich ein Deformationselement als Materialbereich 24', 24" oder auch als Stoßdämpfer 51 bzw. als Spiralfeder oder allgemein als Federelement vorgesehen sein. Bei der in Figur 8 schematisch dargestellten Ausführungsform des Verriegelungsmittels 25 ist eine asymmetrische Verzahnung 41 zwischen den zwei teleskopartig ineinandergreifenden Zylinderelementen vorgesehen, die gemeinsam das Aufstellelement 24 bilden. Hierbei ist die asymmetrische Verzahnung 41 derart vorgesehen, dass eine Ausstellbewegung der Zylinderelemente möglich ist, jedoch keine Rückbewegung. Gemäß einer nicht dargestellten Variante dieser Ausführungsform des Verriegelungsmittels 25 ist es vorgesehen, dass eine spiralförmig im Bereich des Umfangs der Zylinderelemente angeordnete Zapfenkulissenführung bzw. Zapfenführungsbahn in ihrem der aktiven Position (ausgestellte Zylinderelemente) entsprechenden Endbereich eine verringerte Steigung aufweist, die im Falle einer Auslösung der Rückhaltevorrichtung 20 zur Verhinderung der Einstellung in die inaktive Position der Rückhaltevorrichtung führt.

### Bezugszeichenliste

- 10: Fahrzeugsitzes
- 15: Sitzunterbaus
- 16: Bodenbaugruppe
- 20: Rückhaltevorrichtung
- 21: inaktive Position
- 21': eingezogene Position
- 22: aktive Position
- 22': ausgestellte Position
- 23: Aktuierungsmittel
- 24: Aufstellelement
- 24', 24": Materialbereiche des Aufstellelements als Deformationselemente
- 30: Sitzteil
- 31: Sitzseitenteile
- 32: Sitzfläche
- 33: Polsterung/Sitzkissen
- 34: Sitzschale/Polsterträger/Sitzwanne
- 45: Unterschale
- 46: Oberschale
- 51: Stoßdämpfer/Gasdruckdämpfer als Deformationselemente
- 52: Materialbereich als Deformationselement
- 53: Langloch als Deformationselement

## Patentansprüche

1. Fahrzeugsitz (10) mit einem Sitzteil (30) und mit einer Rückhaltevorrichtung (20) zur Verhinderung des Durchrutschens eines Passagiers auf dem Fahrzeugsitz (10) bei einer Unfallverzögerung, wobei die Rückhaltevorrichtung (20) in eine eingefahrene inaktive Position (21) einstellbar ist und wobei die Rückhaltevorrichtung (20) in eine ausgefahrene aktive Position (22) einstellbar ist, wobei das Sitzteil (30) in Fahrzeuglängsrichtung beidseitig Sitzseitenteile (31) aufweist, wobei das Sitzteil (30) eine eine Sitzfläche (32) definierende Polsterung (33) und einen unterhalb der Polsterung (33) vorgesehenen Polsterträger (34) aufweist, wobei die zwischen dem Polsterträger (34) und der Polsterung (33) sowie beabstandet zu den Sitzseitenteilen (31) angeordnete Rückhaltevorrichtung (20) ein Aufstellelement (24) und zwischen dem Aufstellelement (24) und der Polsterung (33) ein Oberteil (46) aufweist und wobei das Aufstellelement (24) und/oder das Oberteil (46) wenigstens ein Deformationselement (24', 24", 51, 52, 53) als Energiedissipationsmittel aufweist, wobei das Aufstellelement (24) mittels eines Aktuierungsmittels (23) bewegbar vorgesehen ist, wobei das Aufstellelement (24) mittels eines Aktuierungsmittels (23) von einer der inaktiven Position (21) der Rückhaltevorrichtung (20) entsprechenden eingezogenen Position (21') aus in eine der aktiven Position (22) der Rückhaltevorrichtung (20) entsprechenden ausgestellten Position (22') einstellbar ist, **dadurch gekennzeichnet, dass** zwischen der eingezogenen Position (21') und der ausgestellten Position (22') des Aufstellelements (24) eine Drehung zumindest eines Teils des Aufstellelements (24) um eine im wesentlichen senkrecht verlaufende Achse vorgesehen ist.

2. Fahrzeugsitz (10) nach Anspruch 1, **dadurch gekennzeichnet, dass** das Aktuierungsmittel (23), insbesondere einen pyrotechnischen Linearaktuator und/oder einen reversibel arbeitenden Aktuator, aufweist, wobei das Aktuierungsmittel (23) zwischen dem Polsterträger (34) und der Polsterung (33) angeordnet ist oder zwischen dem Polsterträger (34) und der Polsterung (33) abgestützt ist, wobei insbesondere eine Betätigung des Aktuierungsmittels (23) bereits zeitlich vor dem Vorliegen einer Unfallverzögerung vorgesehen ist.

3. Fahrzeugsitz (10) nach einem der vorhergehenden Ansprüche, **dadurch gekennzeichnet, dass** das Aufstellelement (24) und/oder das Oberteil (46) eine Mehrzahl von Materialzonen (24', 24", 52) unterschiedlichen Materials aufweist, wobei unterschiedliche Materialzonen (24', 24", 52) ein unterschiedliches Deformationsverhalten aufweisen.

4. Fahrzeugsitz (10) nach einem der vorhergehenden Ansprüche, **dadurch gekennzeichnet, dass** das Aufstellelement (24) und/oder das Oberteil (46) zumindest teilweise reversibel deformierbar vorgesehen ist.

5. Fahrzeugsitz (10) nach einem der vorhergehenden Ansprüche, **dadurch gekennzeichnet, dass** die Rückhaltevorrichtung (20) ein Verriegelungsmittel (25) aufweist, wobei das Verriegelungsmittel bevorzugt durch die Bewegung des Aufstellelements (24) bewegbar vorgesehen ist.

## Claims

1. A vehicle seat (10) with a seat part (30) and with a restraint device (20) for preventing the submarining of a passenger on the vehicle seat (10) in the case of a deceleration due to an accident, wherein the restraint device (20) is able to be adjusted into a retracted inactive position (21) and wherein the restraint device (20) is able to be adjusted into an extended active position (22), wherein the seat part (30) has lateral seat parts (31) on both sides in the longitudinal direction of the vehicle, wherein the seat part (30) has a padding (33) defining a seat surface (32), and has a padding support (34) provided beneath the padding (33), wherein the restraint device (20), arranged between the padding support (34) and the padding (33) and spaced apart from the lateral seat parts (31), has a positioning element (24) and an upper part (46) between the positioning element (24) and the padding (33), and wherein the positioning element (24) and/or the upper part (46) has at least one deformation element (24', 24", 51, 52, 53) as energy dissipation means, wherein the positioning element (24) is provided so as to be movable by means of an actuating means (23), wherein the positioning element (24) is able to be adjusted by means of an actuating means (23) from a retracted position (21') corresponding to the inactive position (21) of the restraint device (20) into an extended position (22') corresponding to the active position (22) of the restraint device (20), **characterized in that** between the retracted position (21') and the extended position (22') of the positioning element (24) a rotation at least of a part of the positioning element (24) is provided about an axis which is running substantially perpendicularly.

2. The vehicle seat (10) according to claim 1, **characterized in that** the actuating means (23) has in particular a pyrotechnic linear actuator and/or a reversibly-operating actuator, wherein the actuating means (23) is arranged between the padding support (34) and the padding (33) or is supported between the padding support (34) and the padding (33), wherein in particular an actuation of the actuating means (23) is already provided chronologically before the presence of a deceleration due to an accident.

3. The vehicle seat (10) according to one of the preceding claims, **characterized in that** the positioning element (24) and/or the upper part (46) has a plurality of material zones (24', 24", 52) of different material, wherein different material zones (24', 24", 52) have a different deformation behaviour.

4. The vehicle seat (10) according to one of the preceding claims, **characterized in that** the positioning element (24) and/or the upper part (46) is provided so as to be at least partially reversibly deformable.

5. The vehicle seat (10) according to one of the preceding claims, **characterized in that** the restraint device (20) has a locking means (25), wherein the locking means is provided so as to be movable preferably by the movement of the positioning element (24).

## Revendications

1. Siège de véhicule (10) comportant une partie d'assise (30) et comportant un dispositif de retenue (20) pour empêcher le glissement d'un passager sur le siège de véhicule (10) lors d'une décélération en cas d'accident, dans lequel le dispositif de retenue (20) peut être réglé dans une position inactive rétractée (21) et dans lequel le dispositif de retenue (20) peut être réglé dans une position active déployée (22), dans lequel la partie d'assise (30) présente dans la direction longitudinale du véhicule des parties latérales d'assise (31) des deux côtés, dans lequel la partie d'assise (30) présente un rembourrage (33) définissant une surface d'assise (32) et un support de rembourrage (34) prévu au-dessous du rembourrage (33), dans lequel le dispositif de retenue (20) disposé entre le support de rembourrage (34) et le rembourrage (33) également en espacement par rapport aux parties de siège latérales (31) présente un élément qui se dresse (24) et une partie supérieure (46) entre l'élément qui se dresse (24) et le rembourrage (33) et dans lequel l'élément qui se dresse (24) et/ou la partie supérieure (46) présente au moins un élément de déformation (24', 24'', 51, 52, 53) comme moyen de dissipation d'énergie, dans lequel l'élément qui se dresse (24) est prévu de manière mobile au moyen d'un moyen d'actionnement (23), dans lequel l'élément qui se dresse (24) peut être réglé au moyen d'un moyen d'actionnement (23) d'une position rétractée (21') correspondant à la position inactive (21) du dispositif de retenue (20) en une position dressée (22') correspondant à la position active (22) du dispositif de retenue (20), **caractérisé en ce que** entre la position rétractée (21') et la position dressée (22') de l'élément qui se dresse (24) une rotation d'au moins une partie de l'élément qui se dresse (24) autour d'un axe s'étendant essentiellement perpendiculairement est prévue.

2. Siège de véhicule (10) selon la revendication 1, **caractérisé en ce que** le moyen d'actionnement (23) présente notamment un actionneur linéaire pyrotechnique et/ou un actionneur fonctionnant de manière réversible, dans lequel le moyen d'actionnement (23) est disposé entre le support de rembourrage (34) et le rembourrage (33) ou est appuyé entre le support de rembourrage (34) et le rembourrage (33), dans lequel notamment un actionnement du moyen d'actionnement (23) est déjà prévu temporellement avant qu'une décélération en cas d'accident se présente.

3. Siège de véhicule (10) selon une des revendications précédentes, **caractérisé en ce que** l'élément qui se dresse (24) et/ou la partie supérieure (46) présente une pluralité de zones de matériau (24', 24'', 52) d'un matériau différent, dans lequel les zones de matériau différentes (24', 24", 52) présentent un comportement de déformation différent.

4. Siège de véhicule (10) selon une des revendications précédentes, **caractérisé en ce que** l'élément qui se dresse (24) et/ou la partie supérieure (46) est prévu de manière déformable au moins partiellement réversiblement.

5. Siège de véhicule (10) selon une des revendications précédentes, **caractérisé en ce que** le dispositif de retenue (20) présente un moyen de verrouillage (25), dans lequel le moyen de verrouillage est prévu de manière mobile de préférence via le mouvement de l'élément qui se dresse (24).
